# EUROPEAN PATENT SPECIFICATION

(11) **EP 3 414 522 B1**
(45) Date of publication and mention of the grant of the patent: **24.03.2021**
(21) Application number: 17750981.7
(22) Date of filing: 13.02.2017
(51) Int. Cl.: G01C 9/02, G01F 23/00, G01F 22/00, B60K 15/03, G01F 23/18

(54) **PROBE WITH NO MOVING PARTS FOR A TANK**
SONDE OHNE BEWEGLICHE TEILE FÜR EINEN TANK
SONDE SANS PARTIES MOBILES POUR UN RÉSERVOIR

(30) Priority: 11.02.2016 US 201615041847; 11.02.2016 US 201615041821
(43) Date of publication of application: 19.12.2018
(73) Proprietor: Innovative Measurement Methods, Inc., Sugar Land, TX 77487 (US)
(72) Inventor: WESTMORELAND, Allen Ray, SugarLand, Texas 77478 (US); HOBEN, John Charles, Sugarland, Texas 77478 (US); BUKHMAN, Alexander, Sugarland, Texas 77478 (US); BRODSKY, Yosef, Sugarland, Texas 77478 (US)
(74) Representative: CSY London
(86) International application number: PCT/US2017/017712
(87) International publication number: WO 2017/139792

(56) References cited:
- EP-A1- 0 996 853
- WO-A1-88/04031
- WO-A1-2015/094327
- CN-U- 204 461 544
- US-A- 5 351 725
- US-A1- 2006 010 962
- US-A1- 2009 025 486
- US-A1- 2009 187 297
- US-A1- 2013 120 155
- US-A1- 2014 039 816
- US-A1- 2014 039 816
- US-B1- 7 315 788
- US-B1- 7 471 208
- US-B1- 8 594 866
- US-B1- 9 347 848
- US-B1- 9 476 743
- US-B2- 7 328 624

## Description

The present embodiments generally relate to a probe for measuring fluids in one or more stationary tanks or tanks on a marine floating vessel.

The document WO 99/27344 discloses a probe rod provided with sensor housings, pipe sections and joint sleeves all having a common outer diameter. The sensor housings and joint sleeves are connected to the various pipe sections. Pressure and temperature sensors are mounted within the sensor housings. Output leads from the sensors are threaded through the pipe sections and through throughways in the sensor housings and joint sleeves to a circuitry box mounted on the top of the probe rod. The circuitry box contains electronics for processing signals generated by the sensors and for transmitting the results to a remote location.

A need exists for a highly sensitive monitoring probe that is easy to manufacture, easy to install and incorporates the use of synchronized sensing devices for increase accuracy in measurements and can accommodate pitch, heave and yaw motions.

According to the present invention there is provided a probe with no moving parts for use in a tank, as defined in claim 1. Preferred features of the invention are recited in the dependent claims.

### BRIEF DESCRIPTION OF THE DRAWINGS

The detailed description will be better understood in conjunction with the accompanying drawings as follows:
Figure 1 shows a probe for use in a tank according to one or more embodiments.
Figure 2 shows a detail of the sensor housing in partial cross section according to one or more embodiments.
Figure 3 is a detailed view of a channel of the sensor housing according to one or more embodiments.
Figure 4 shows a probe with an outer surface in a stepped configuration according to one or more embodiments.
Figures 5A and 5B depict a probe processor and a probe data storage according to one or more embodiments.
Figure 6 depicts a remote data storage according to one or more embodiments.
The present embodiments are detailed below with reference to the listed Figures.

### DETAILED DESCRIPTION OF THE EMBODIMENTS

Before explaining the present apparatus and system in detail, it is to be understood that the apparatus and system are not limited to the particular embodiments and that it can be practiced or carried out in various ways.

The embodiments relate to a
probe with no moving parts for use in one or more tanks mounted stationarily, or on a floating vessel, such as ships, barges and offshore floating platforms

In embodiments, the probe can be connected with other probes and be operable from a remote control processor connected through a network.

The probe has a plurality of pressure transducers and a plurality of temperature sensors electrically connected to a probe processor.

The probe controls the temperature and pressure transducers to produce bidirectional signals and calculates at least one physical property of fluid in the tank while performing adaptive measurement for dynamic and static synchronized and non-synchronized measurement.

The probe additionally identifies temperature sensors and pressure transducers not covered by the fluid in the tank.

The probe can calibrate pressure transducers in a vapor space of the tank when the pressure transducers are no longer in the fluid and can use values from an inclinometer transferring the bidirectional signals to a client device via a network to provide accurate interpretations of pressure measurements.

The present embodiments can have the benefit of being both a leak detection and an emission monitoring apparatus that can detect leaks and monitor emissions from tanks, and then perform a comparison of measured emission to stored requirements of environmental laws and regulations which can be stored in a data storage connected to the processor. The probe can automatically provide a notification via a network to a client device when the comparison fails to comply with the stored requirements of environmental laws and regulations.

Some embodiments are for a marine probe that can utilize multiple temperature sensors and multiple pressure transducers for performing hydrostatic tank measurements and provide increased accuracy and consistency with regard to measurement values.

Specific structural and functional details disclosed herein are not to be interpreted as limiting, but merely as a basis of the claims and as a representative basis for teaching persons having ordinary skill in the art to variously employ the present embodiments.

The term "fluid" as used herein can include liquids, gasses with or without particulates and combinations thereof. Vapor pressure can be used in the conventional manner and can be included within the scope of the term "gas" for this application. Fluids include hydrocarbons, water, gasoline, oil, pharmaceuticals, alcohols, esters, inert gasses and vapors.

The term "fluid temperature" as used herein can refer to an average fluid temperature or a multipoint spot temperature of the fluid.

The term "inclinometer" as used herein can refer to an instrument for measuring angles of a floating object with respect to gravity. The inclinometer can measure after draft, forward draft, list, trim, or pitch and roll.

The term "pressure transducer" as used herein can refer to a device that measures pressure of the fluid.

The term "processor" as use herein can be a laptop, a cellular phone or smart phone, a desktop computer, a server on a network, an additional measuring device that does different measuring and can connect to the plurality of temperature sensors and plurality of pressure transducers, and combinations thereof. The processor can be in wired or wireless communication with the temperature sensors and pressure transducers.

The term "data storage" refers to a non-transitory computer readable medium, such as a hard disk drive, solid state drive, flash drive, tape drive, and the like. The term "non-transitory computer readable medium" excludes any transitory signals but includes any non-transitory data storage circuitry, e.g., buffers, cache, and queues, within transceivers of transitory signals.

The term "simultaneously" as used herein can mean the temperature sensors and pressure transducers can collect measured data at the same time or within a few milliseconds of each other, such as a period ranging from zero to one hundred milliseconds.

The term "temperature sensor" as used herein can refer to either one temperature sensor, or a pair of temperature sensors for detecting a temperature of a fluid in a tank.

The term "tank" as used herein can refer to a wide variety of tanks, and containers that hold fluids including separators, storage tanks, container trucks, and vats. For example, the tank can include a tank containing as much as ten barrels (1192,4 litres) of oil, or as much as 1,000,000 barrels (119.24E+6 litres) of oil. The tank can be structured with or without floating roofs. The tank can have any shape, including circular shapes, square shapes or other similar shapes. Tanks of any volume made from various materials are contemplated.

The probe of the invention can occupy less space than other methods known in the art.

The probe of the invention can provide the benefit of continuous measurements, while providing a comparison of measured values with preset limits, such as environmental standards.

The probe of the invention can provide enhanced accuracy and consistent measurement over existing detection and monitoring apparatus.

The probe of the invention can identify many physical characteristics that can be measured using the temperature sensors and pressure transducers for the gas, or liquid, with or without particulate matter.

Use of the present probe of the invention can prevent hazardous environmental emissions, and avoid other potentially dangerous or detrimental fluid conditions through continuous monitoring.

The comparison of measurements with preset limits by the probe as described herein, can allow remediation to be taken when fluid conditions reach unacceptable levels, such as extreme pressures and temperatures, the formation of vacuums, and the emissions of harmful amounts of hydrocarbons and other potentially harmful chemicals, thereby preventing environmental contamination, explosions, loss of fluid, death and damage to equipment.

For example, a calculated value, such as a mass of a fluid can range from a few tons to hundreds of thousands of tons of crude oil in a ship or barge. A calculated value, such as a fluid volume in a tank can range from tens of barrels to millions of barrels (1 barrel = 119.24 litres) of liquid petroleum gas. Fluid densities can range from 0.5 g/cm³ to 2 g/cm³ or more for most petroleum products.

Temperature of the fluid can range from -60 degrees Centigrade to 200 degrees Centigrade and can include vapor temperatures in addition to liquid temperature measurement. Impurity of the fluid can include a detection of water in oil on a percentage basis, for example a 5 percent impurity in West Texas crude oil.

The probe can communicate via a network with a remote processor to use a computed mass of the fluid for balancing a floating vessel during loading, and unloading of the floating vessel; and for inventory control and custody transfer.

According to the invention, the plurality of pressure transducers includes a diaphragm. The diaphragm can be oriented horizontal to the bottom of the tank but can be at other orientations.

In embodiments, one or more of the temperature sensors or pressure transducers can provide an analog signal to a probe processor. The analog signal can be digitized, such as by use of an analog-to-digital converter, and stored in fixed or removable data storage, transmitted to remote data storage or another processor, or combinations thereof.

In embodiments, the probe can use temperature sensors and pressure transducers with a built-in processor and direct digital communications to probe processor. That is, each temperature sensors and pressure transducer can communicate with a probe processor which then can wirelessly communicate or make a wired connection to a network with a remote processor and remote data storage, such as a cloud processing system.

An example of the probe can use temperature sensors and pressure transducers in a long row, each temperature sensor and pressure transducer having a sequential number 1 to 10. In this embodiment, the temperature sensors numbering 1, 3, 5, 7, 9 can communicate with a processor "A" the temperature sensors with numbers 2, 4, 6, 8, and 10 can communicate with a processor "B". This alternating measurement using multiple processors continuously can provide for the extreme high accuracy and reliability of measurement with this device.

By connecting multiple probes of the probe processor together, the individual probe data can be compounded to create a virtual reading within one tank in case multiple probes are installed into the same tank.

The synchronization of the pressure transducers can be established using a clock or timing device with the processor or internal to the processor, to synchronize pressure transducers, electronic switches and signals, analog-to-digital converters, and other equipment connected to the invention for increased accuracy.

The probe processor can synchronously poll measurement data from the one or more temperature sensors and one or more pressure transducers to simultaneously and continuously calculate values, forming calculated values. For example, the fluid density can be difficult to measure in a moving fluid without using synchronized data.

The probe processor can convert pressure and temperature sensor data to one or more values using computer instructions with models and other computations stored in memory of the associated data storage. The values can provide a reading or notification of a measurement or leak detection and related measurement, including unauthorized movement of fluid from the tank.

The calculated values can be compared to one or more predetermined ranges of values for the fluid to identify whether the calculated values are within the predetermined ranges. For example, a density of a specific crude oil can have a predetermined range from 0.85 g/cm³ to 1.0 g/cm³ and the present apparatus can constantly collect data and compare the collected data to that predetermined range. It can be contemplated that notification can be provided if the calculated values exceed a predetermined range. Use of automated responses, such as alarms, when the calculated values exceed a predetermined range, can also be contemplated.

The calculated values can include a mass of the fluid, a fluid volume, an average temperature of the fluid, a multiple density strata of the fluid, an average density of the fluid, a level of the fluid, a fluid flow rate, an impurity content of the fluid, an entrained water content of the fluid, a free water content of the fluid, or combinations thereof.

An embodiment of the invention can monitor and compare measurements for atmospheric or ambient pressures and temperatures to measure vapor pressures and vapor temperatures to provide data simultaneously with notifications and/or alarms. Examples of these types of data can include extreme pressures, extreme temperatures, formation of vacuums, high amounts of hydrocarbon emissions or other harmful chemical emissions, or combinations thereof. Immediate notifications and alarms can be produced to provide an alert of potentially harmful gasses, liquids, and vapors that are escaping into the atmosphere and surrounding area.

The probe processor can communicate compared values to a data collector, which can include one or more data storage media in communication with the processor, including remote data storage media, removable data storage media, and fixed data storage media.

In embodiments, the remote processor can communicate with one or more of the following: (1) a remote terminal unit, such as a Bristol Babcock RTU for tubular line monitoring, (2) a distributive control system, such as, a Honeywell DSC 3000, (3) a supervised control and data acquisition (SCADA) system, such as a Human Machine Interface system, (4) another computer, (5) another a tank or vessel gauge interface unit, such as a 1515 ETGI provided by Gauging Systems, Inc., of Houston, Texas, and other similar devices.

In embodiments, communication of compared values to the remote processor can be performed using a field wiring bus, a network, or combinations thereof. Useable networks can include the internet, a local area network, a radio network, a hard-wired network, a copper wire network, a cellular network, a satellite network, a fiber optic network, an infrared connection, a plain old telephone system (POTS), other wireless or wired networks, and combinations thereof.

In an embodiment, temperature sensors and pressure transducers can each include a transmitter, such as a radio transceiver, a satellite transmitter, a cellular transceiver, an RS-485 wired transmitter, or other similar transmitters. The transmitter can communicate between the temperature sensors and pressure transducers and the remote processor. In embodiments, communication can be a wireless communication, such as an infrared, satellite, or cellular communication, a fiber optic communication, a cabled communication, or combinations thereof.

In embodiments, a transmitter can be disposed in proximity to one or more tanks for transmitting data from the temperature sensors and pressure transducers within the one or more tanks to a remote processor.

The invention can include a sensor housing for containing temperature sensors and pressure transducers. The sensor housing can be made from any durable material, including machined stainless steel, plastic, a metal alloy, such as HASTELLOY-C™, TEFLON™, aluminum, KYNAR™ composites, ceramic composites, and formed polymer blends, such as polyvinyl chloride (PVC).

In an embodiment, the invention can include one or more channels. The channels can contain signaling wires to convey temperature sensor data to the probe processor. The channels can be smooth walled. The signaling wires can be multi-conductor wire, such as wire available from Belden, other types of wire, or similar communication wiring, such as fiber optic wiring or cable.

In one embodiment, the invention can be installed into or in proximity to a gauge well or gauge hatch of a large tank, such as an oil tank, on a floating vessel, so that uncertainties caused by comparison with manual gauging due to reference point movement or bottom movement of the tank are eliminated.

By locating the invention with the gauge well of the tank, the invention can provide multiple measurements at the same single location where manual measurements are taken and greatly increase the verifiability of a monitoring function.

With this alignment, the invention can measure automatically all the values that are measured manually from the gauge well so that comparisons can be made of many variables at the same time the manual samplings by the gauge well are occurring.

Examples of samplings and measurement values can include: a fluid level, temperatures of the fluid, fluid density, and a percentage of water content in a hydrocarbon fluid.

Tank samplings and measured values include: level and temperature of the fluid and fluid density. The alignment of the invention with the gauge well of the tank can allow the measured values from the invention to be compared and calculated with the manual gauge well samplings and readings and dramatically improves the verification ability and consistency of the measurement values.

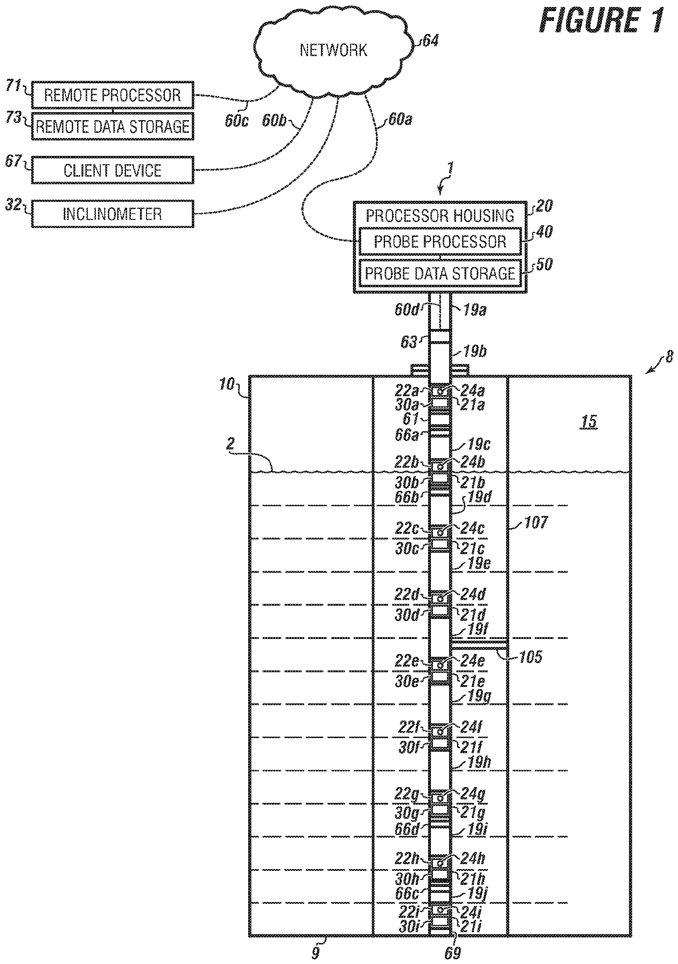

Turning now to the Figures, Figure 1 shows a probe for use in a tank according to one or more embodiments.

In embodiments, the probe 1 can have no moving parts for use in the tank 8. The tank can have a floor 9 and at least one wall 10. In this embodiment, the tank is shown with a cylindrical wall.

The probe 1 can be configured for continuous measurement of a fluid 2 while the probe is immersed in that fluid. The fluid 2 can be a combination of liquid and vapor. The tank can have a vapor space 15 above the fluid in the tank.

The probe 1 can have a processor housing 20 and a plurality of pressure transducers 22a-22i. In embodiments, each pressure transducer can have a diaphragm 24a-24i.

Each pressure transducer can be configured for continuous pressure measurement through direct contact with the fluid 2 in the tank 8.

The probe 1 can have a plurality of temperature sensors 30a-30i, wherein each of the temperature sensors can be contained in one of the pressure transducers 22a-22i or in one of the sensor housings 21a-21i.

Each temperature sensor can be configured for continuous temperature measurement of the fluid 2 in the tank 8.

The processor housing 20 can have a probe processor 40 that can be electrically connected to the plurality of pressure transducers and to the plurality of temperature sensors and electronically connected to a network 64 with bidirectional signal 60a-60d.

A probe data storage 50 can also be in the processor housing 20. The probe data storage 50 can be in bidirectional communication with the probe processor 40.

The term "data storage" refers to a non-transitory computer readable medium, such as a hard disk drive, solid state drive, flash drive, tape drive, and the like. The term "non-transitory computer readable medium" excludes any transitory signals but includes any non-transitory data storage circuitry, e.g., buffers, cache, and queues, within transceivers of transitory signals.

The probe data storage 50 can be computer readable medium with computer instructions for instructing the probe processor to control the plurality of temperature sensors and the plurality of pressure transducers to produce a bidirectional signal 60a to the network and to produce a bidirectional signal 60d to the plurality of temperature sensors and the plurality of pressure transducers.

A temperature and pressure transducer 61 can be located in the vapor space 15 of the tank 8. According to the invention, a plurality of temperature and pressure transducers can be used.

A plurality of conduits 19a-19j can be used for connecting the processor housing 20 with the sensor housings 21a-21i. The conduits can extend to a bottom of the probe. In embodiments, the bottom of the probe can be proximate or within inches, such as 1 inch to 30 inches of the floor 9 of the tank 8.

A plurality of switches 66a-66d can be located in the tank 8. Each switch can detect liquid levels, compare detected liquid levels to a preset level in the switch, and then provide a notification signal to a client device 67, the probe processor 40 or both the client device and the probe processor when the liquid exceeds or fails to meet the preset level in the switch.

An external sensor 63 can be disposed outside of the tank 8. The external sensor can be electrically connected to the probe processor 40.

The external sensor 63 can be configured to measure ambient pressure and ambient temperature outside the tank.

The external sensor 63 can provide signals to the probe processor 40. The probe processor can use computer to compare the ambient pressure and temperature measured outside the tank by the external sensor to measured pressure and temperature inside the tank measured by the plurality of pressure transducers and the plurality of temperature sensors for gas blanket monitoring and asset protection of the tank 8.

The probe 1 is shown communicating using the bidirectional signals 60a and 60d with the network 64. Some of the bidirectional signals 60b can be further transmitted to the network 64 to a client device 67 and commands and data can be transmitted from the client device 67 to the network 64 for transmission to the probe processor 40.

A remote processor 71 can be in communication with the probe processor 40 through the network 64. The remote processor can be depicted in communication with bidirectional signals 60c to the network for communication with the probe processor.

The remote processor 71 can be further communicating with a remote data storage 73.

Various other sensors can be utilized to enhance safety, functionality, and performance while implementing the present invention. Sensors for application specific parameters can be included, utilized, and recorded. Persons having ordinary skill in the art can select such sensors on a case by case basis. For example, a compound containing sulfur detector 69 can be in communication with the probe processor 40 for detecting compounds containing sulfur. Although the compound containing sulfur detector 40 is shown to be proximate a bottom or the floor 9 of the tank8, the compound containing sulfur detector 69 can also be located in the vapor space 15.

The compound containing sulfur detector can be in the fluid in the tank, in vapor space in the tank, or mounted external to the tank.

The probe processor can compute compound containing sulfur concentration for protection of personnel or for estimation of quality of crude oil.

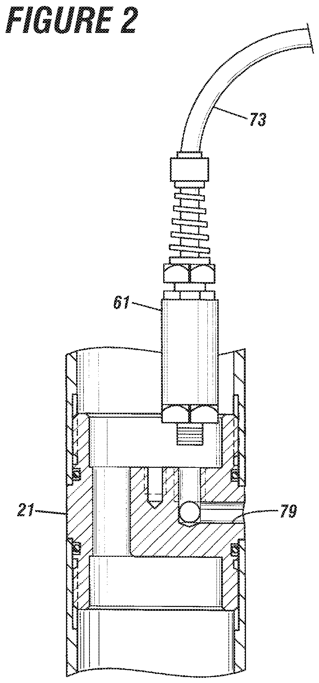

Figure 2 shows a detail of the sensor housing 21 in partial cross section according to one or more embodiments.

Output leads 73 are shown from the temperature and pressure transducer 61. The temperature and pressure transducer 61 can be disposed partially in the sensor housing 21. In embodiments, to operate the temperature and pressure transducer 61, a portion of the temperature and pressure transducer can be external of the sensor housing.

A channel 79 can be formed in the sensor housing 21. The channel 79 can have a plurality of inclined surfaces that can enable the fluid from the tank to contact the temperature and pressure transducer 61.

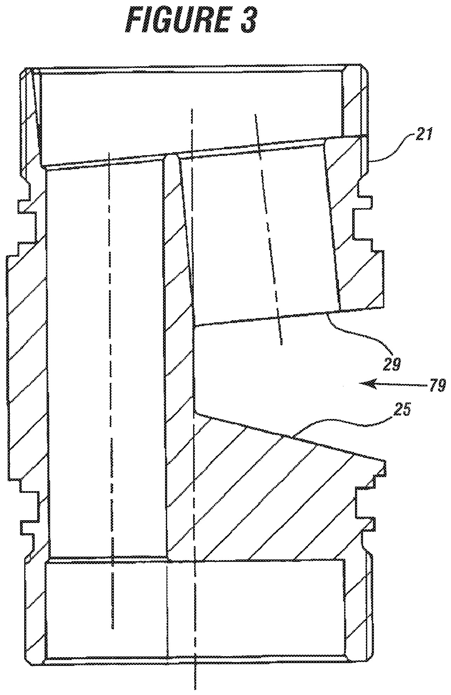

Figure 3 is a detailed view of a channel of the sensor housing according to one or more embodiments.

In this embodiment, the probe can have two inclined surfaces in the sensor housing 21, shown as a first surface 25 and a second surface 29 that can form the channel 79. Each inclined surface can have a slope from 2 degrees to 50 degrees.

In embodiments, a plurality of inclined surfaces can be used on one side of the channel 79. The channel 79 can enable the fluid from the tank to contact a pressure transducer or a temperature sensor in the sensor housing or a combination pressure and sensor transducer in the sensor housing.

In embodiments, one inclined surface can be formed on a side of the channel 79.

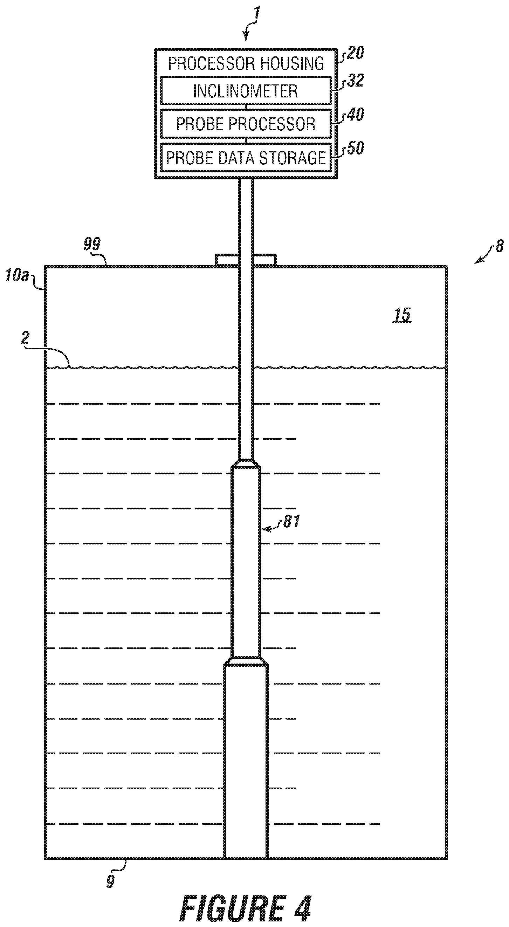

Figure 4 shows a probe with an outer surface in a stepped configuration according to one or more embodiments.

The probe 1 is shown with an outer surface 81 formed in a sequential stepped configuration as three segments, wherein each segment expands at least 10 percent in diameter sequentially from an adjacent segment.

The probe 1 can have a tank movement measuring device 83 connected to a roof 99 of the tank 8 with the fluid 2 and the vapor space 15. The tank 8 can have at least one wall 10, shown here as a cylindrical tank, and a floor 9. The tank movement measuring device 83 can be mounted external of the tank 8.

The tank movement measuring device 83 can be electronically connected to the probe processor 40 in the processor housing 20 or the remote processor via the network. The tank movement measuring device can provide signals that can be stored in the remote processor data storage. The tank movement measuring device 83 can communicate with the probe processor 40 or a display for an operator. The tank movement measuring device can measure and display movement due to flexing of the floor 9 of the tank 8 or due to flexing of the roof 99 of the tank 8. The display can be a local display, a remote display, or combinations thereof.

The tank movement measuring device 83 can measure when the probe has moved due to the flexing of the floor 9 of the tank 8 with the fluid 2 or flexing of the roof 99 of the tank with the vapor space 15 relative to the floor 9. The tank movement measuring device can transmit those measurements to the probe data storage 50 either wirelessly or in a wired communication for further notification to the display associated with the probe processor 40 or the remote processor via the network or the client device via the network.

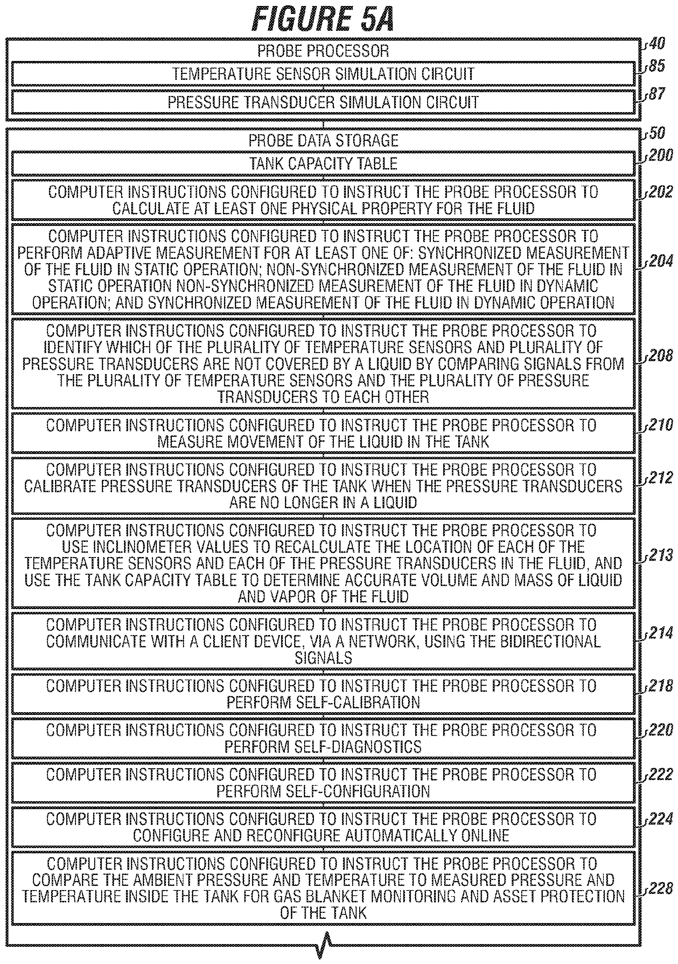

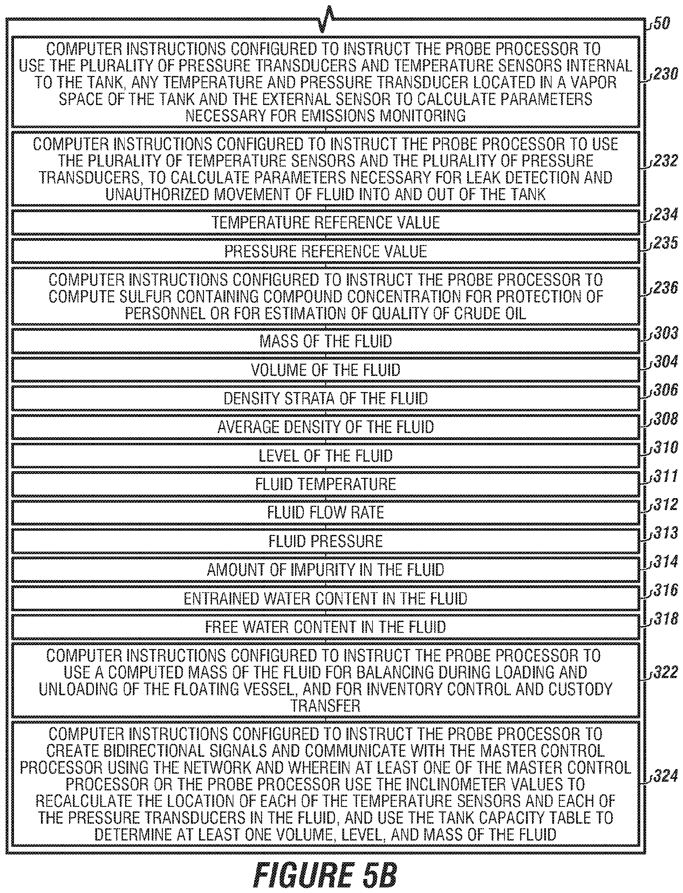

Figures 5A and 5B depict a probe processor and a probe data storage according to one or more embodiments.

In embodiments, the probe processor 40 can have a temperature sensor simulation circuit 85 and a pressure transducer simulation circuit 87.

The probe data storage 50 can be connected to the probe processor 40.

The temperature sensor simulation circuit 85 can be for automatically calibrating the probe processor and can use a temperature reference value 234 for calibration. The temperature reference value 234 can be shown in the probe data storage 50.

The pressure transducer simulation circuit 87 can be for automatically calibrating the probe processor. The pressure transducer simulation circuit can use a pressure reference value 235 for calibration. The pressure reference value 235 can be shown in the probe data storage 50.

The probe data storage 50 contains a tank capacity table 200, which can show capacities and/or volumes in a tank for various fluid levels as measured from a reference gauge point.

The probe data storage contains computer instructions 202 configured to instruct the probe processor to calculate at least one physical property for the fluid.

The physical properties can be stored in the probe data storage and can include but are not limited to: a mass of the fluid 303, a volume of the fluid 304, a density strata of the fluid 306, an average density of the fluid 308, a level of the fluid 310, a fluid temperature 311, a fluid flow rate 312, a fluid pressure 313, an amount of impurity in the fluid 314. According to the invention, the physical properties include one of an entrained water content in the fluid 316, and a free water content in the fluid 318.

The probe data storage contains computer instructions 204 to instruct the probe processor to perform adaptive measurement for at least one of: synchronized measurement of the fluid in static operation, non-synchronized measurement of the fluid in static operation, non-synchronized measurement of the fluid in dynamic operation, and synchronized measurement of the fluid in dynamic operation.

The probe data storage contains computer instructions 208 configured to instruct the probe processor to identify which of the plurality of temperature sensors and the plurality of pressure transducers are not covered by a fluid by comparing signals from the plurality of temperature sensors and the plurality of pressure transducers to each other.

The probe data storage contains computer instructions 210 configured to instruct the probe processor to measure movement of the fluid in the tank.

The probe data storage contains computer instructions 212 configured to instruct the probe processor to calibrate pressure transducers of the tank when the pressure transducers are no longer in a fluid.

The probe data storage contains computer instructions 213 configured to instruct the probe processor to use inclinometer values to recalculate the location of each of the temperature sensors and each of pressure transducers in the fluid, and use the tank capacity table to determine accurate volume and mass of liquid and vapor of the fluid.

The probe data storage contains computer instructions 214 configured to instruct the probe processor to communicate with a client device via a network by using the bidirectional signals.

The probe data storage contains computer instructions 218 configured to instruct the probe processor to perform self-calibration.

The probe data storage can contain computer instructions 220 configured to instruct the probe processor to perform self-diagnostics.

The probe data storage can contain computer instructions 222 configured to instruct the probe processor to perform self-configuration.

In embodiments, the probe data storage can have at least one computer instruction configured to instruct the probe processor to perform self-calibration, perform self-diagnostics, perform self-configuration, or various combinations thereof.

The probe data storage can contain computer instructions 224 configured to instruct the probe processor to configure and reconfigure automatically online.

The probe data storage can contain computer instructions 228 configured to instruct the probe processor to compare the ambient pressure and temperature to measured pressure and temperature inside the tank for gas blanket monitoring and asset protection of the tank.

The probe data storage can contain computer instructions 230 configured to instruct the probe processor to use the plurality of pressure transducers and temperature sensors internal to the tank, any temperature and pressure transducer located in a vapor space of the tank and the external sensor to calculate parameters necessary for emissions monitoring.

The probe data storage can contain computer instructions 232 configured to instruct the probe processor to use the plurality of temperature sensors and/or the plurality of pressure transducers to calculate parameters necessary for leak detection and unauthorized movement of fluid into and out of the tank.

The temperature sensor simulation circuit's temperature reference value 234 and the pressure transducer simulation circuit's pressure reference value 235 are shown in the probe data storage 50.

The probe data storage can contain computer instructions 236 configured to instruct the probe processor to compute sulfur containing compound concentration for protection of personnel or for estimation of quality of crude oil as mentioned earlier.

The probe data storage can contain computer instructions 322 configured for instruct the remote processor to use a computed mass of the fluid for balancing during loading and unloading of the floating vessel and for inventory control and custody transfer.

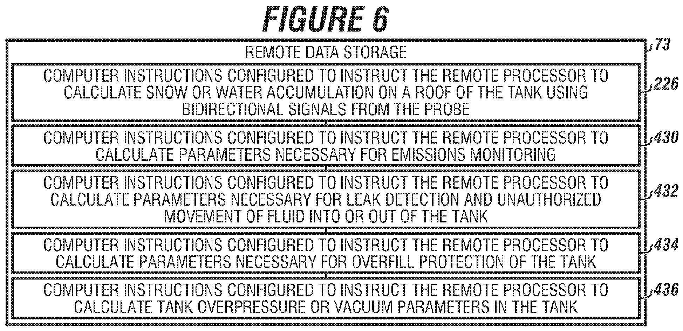

Figure 6 depicts a remote data storage according to one or more embodiments.

The remote data storage 73 can contain computer instructions 226 configured to instruct the remote processor to calculate snow or water accumulation on a roof of the tank using bidirectional signals from the probe processor.

The remote data storage can contain computer instructions 430 configured to instruct the remote processor to calculate parameters necessary for emission monitoring.

The remote data storage can contain computer instructions 432 configured to instruct the remote processor to calculate parameters necessary for leak detection and unauthorized movement of fluid into or out of the tank.

The remote data storage can contain computer instructions 434 configured to instruct the remote processor to calculate parameters necessary for overfill protection of the tank.

The remote data storage can contain computer instructions 436 configured to instruct the remote processor to calculate tank overpressure or vacuum parameters in the tank.

In embodiments, the processor housing can be weatherproof or explosion proof.

In embodiments, at least one probe can be used. In embodiments, multiple or a plurality of probes can be used in one or more tanks of a floating vessel.

In embodiments, multiple probe processors and probe data storages can be used.

In an embodiment, a plurality of processor housings can be configured to prevent degradation in marine environments.

In embodiments, the inclinometer can be mounted to a floating vessel and can provide measuring angles of the floating vessel relative to gravity for use by each probe processor.

Each probe processor can electrically and bi-directionally connect to each of the plurality of pressure transducers, the plurality of temperature sensors and the inclinometer of a marine probe system.

While these embodiments have been described with emphasis on the embodiments, it should be understood that within the scope of the appended claims, the embodiments might be practiced other than as specifically described herein.

## Claims

1. A probe (1) with no moving parts for use in a tank (8), the tank having a floor (9) and at least one wall (10), the probe configured for continuous measurement of a fluid (2) while immersed in the fluid, wherein the probe comprises:
a. a processor housing (20);
b. a plurality of sensor housings (21a - 21i) connected to the processor housing (20);
c. a plurality of pressure transducers (22a - 22i), each pressure transducer within a sensor housing, each pressure transducer having a diaphragm (24a - 24i), each pressure transducer configured for continuous pressure measurement through direct contact with the fluid (2) in the tank (8);
d. a plurality of temperature sensors (30a - 30i), each temperature sensor within a sensor housing or contained in each pressure transducer, each temperature sensor configured for continuous temperature measurement of the fluid (2) in the tank (8);
e. an inclinometer, optionally mounted either to a floating vessel or within the processor housing (20) for measuring angles of the floating vessel relative to gravity;
f. a probe processor (40) in the processor housing (20), the probe processor electrically and bidirectionally connected to the plurality of pressure transducers (22a - 22i), to the plurality of temperature sensors (30a - 30i), the inclinometer and a network (64); and
g. a probe data storage (50) in the processor housing (20), the probe data storage in communication with the probe processor (40), the probe data storage being a non-transitory computer readable medium with computer instructions for instructing the probe processor to control the plurality of temperature sensors (30a - 30i) and the plurality of pressure transducers (22a - 22i) to produce bidirectional signals to the network, to the plurality of temperature sensors and to the plurality of pressure transducers, the probe data storage containing:
(i) a tank capacity table (200);
(ii) computer instructions (202) configured to instruct the probe processor to calculate at least one physical property related to water content for the fluid, the physical property selected from one of:
1. an entrained water content in the fluid (316); and
2. a free water content in the fluid (318);
(iii) computer instructions (204) configured to instruct the probe processor to perform adaptive measurement for at least one of:
1. a synchronized measurement of the fluid in static operation occurring via the plurality of temperature sensors (30a - 30i) and pressure transducers (22a - 22i);
2. a non-synchronized measurement of the fluid in static operation;
3. a non-synchronized measurement of the fluid in dynamic operation; or
4. a synchronized measurement of the fluid in dynamic operation occurring via the plurality of temperature sensors (30a - 30i) and pressure transducers (22a - 22i);
(iv) computer instructions (208) configured to instruct the probe processor to determine which of the plurality of temperature sensors and the plurality of pressure transducers are not covered by the fluid by comparing signals from the plurality of temperature sensors and the plurality of pressure transducers to each other;
(v) computer instructions (210) configured to instruct the probe processor to measure movement of the fluid in the tank;
(vi) computer instructions (212) configured to instruct the probe processor to calibrate pressure transducers of the tank when the pressure transducers are no longer in the fluid;
(vii) computer instructions (213) configured to instruct the probe processor to use inclinometer values to recalculate the location of each of the temperature sensors and each of the pressure transducers in the fluid, and use the tank capacity table to determine accurate volume and mass of liquid and vapor of the fluid; and
(viii) computer instructions (214) configured to instruct the probe processor to communicate with a client device via the network using the bidirectional signals.

2. The probe of claim 1, comprising at least one temperature and pressure transducer (61) located in a vapor space (15) of the tank (8), and/or an external sensor (63) outside of the tank and electrically connected to the probe processor, the external sensor configured to measure ambient pressure and ambient temperature outside the tank, the external sensor providing signals to the probe processor, the probe processor using computer instructions in the probe data storage, the computer instructions configured to instruct the probe processor to compare measured ambient pressure and temperature to measured pressure and temperature inside the tank for gas blanket monitoring and asset protection of the tank.

3. The probe of either of the preceding claims, wherein an outer surface (81) of the probe expands in a stepped configuration, increasing at least ten percent in diameter.

4. The probe of any of the preceding claims, comprising a channel (79) in the sensor housing to provide contact with the fluid from the tank to at least one of the plurality of temperature sensors and at least one of the plurality of pressure transducers.

5. The probe of claim 4, comprising a plurality of inclined surfaces on at least one side of the channel (79), the plurality of inclined surfaces enabling fluid to contact with at least one of: a pressure transducer and a temperature sensor.

6. The probe of any of the preceding claims, comprising a plurality of switches (66a - 66d) in the tank (8) that provide a notification signal to the probe processor (40), the network (64), or both the probe processor and the network when the liquid exceeds or fails to meet a preset level.

7. The probe of any of the preceding claims, comprising a tank movement measuring device (83) connected to at least one of: the probe processor (40) and a remote processor (71) for displaying and measuring probe movement due to flexing of the floor of the tank or due to flexing of a roof of the tank.

8. The probe of claim 7, comprising the remote processor (71) bidirectionally connected to the probe processor (40) via the network (64), the remote processor further comprising a remote data storage (73), the remote data storage comprising at least one of:
a. computer instructions (430) configured to instruct the remote processor to calculate parameters necessary for emissions monitoring;
b. computer instructions (432) configured to instruct the remote processor to calculate parameters necessary for leak detection and unauthorized movement of fluid into or out of the tank;
c. computer instructions (434) configured to instruct the remote processor to calculate parameters necessary for overfill protection of the tank; and
d. computer instructions (436) configured to instruct the remote processor to calculate tank overpressure or vacuum parameters in the tank.

9. The probe of claim 7 or claim 8, comprising computer instructions (322) for instructing the remote processor to use a computed mass of the fluid for balancing during loading and unloading of the floating vessel and for inventory control and custody transfer.

10. The probe of any of the preceding claims, wherein the probe data storage comprises at least one of:
a. computer instructions (218) configured to instruct the probe processor to perform self-calibration;
b. computer instructions (220) configured to instruct the probe processor to perform self-diagnostics;
c. computer instructions (222) configured to instruct the probe processor to perform self-configuration;
d. computer instructions (224) configured to instruct the probe processor to configure and reconfigure online; and
e. computer instructions (232) in the probe data storage configured to instruct the probe processor to use the plurality of temperature sensors and/or the plurality of pressure transducers to calculate parameters necessary for leak detection and unauthorized movement of fluid into and out of the tank.

11. The probe of any of the preceding claims, comprising a temperature sensor circuit (85) in the probe processor with a temperature reference value (234) in the probe data storage and a pressure transducer circuit (87) in the probe processor with a pressure reference value (235) in the probe data storage, the temperature sensor circuit and the pressure transducer circuit for calibrating the probe processor.

12. The probe of any of claims 2 - 11, comprising computer instructions in the probe data storage (50), the computer instructions (230) configured to instruct the probe processor to use the plurality of pressure transducers and the plurality of temperature sensors internal to the tank, any temperature sensors and any pressure transducer located in the vapor space of the tank and the external sensor to calculate parameters necessary for emissions monitoring.

13. The probe of any of the preceding claims, further comprising at least one compound containing sulfur detector (69) in communication with the probe processor (40) for detecting compounds containing sulfur and computer instructions in the probe data storage configured to instruct the probe processor to compute compounds containing sulfur concentration for protection of personnel or for estimation of quality of crude oil, wherein the compound containing sulfur detector is in liquid in the tank, in vapor in the tank or mounted external to the tank.

14. The probe of any of the preceding claims, wherein the processor housing (20) is weatherproof or explosion proof, and/or the processor housing is configured to prevent degradation in marine environments.

15. The probe of any of the preceding claims, comprising a plurality of conduits (19a - 19i) connecting the processor housing (20) with the sensor housings (21a - 21i) and extending to a bottom of the probe.

## Patentansprüche

1. Sonde (1) ohne bewegliche Teile zur Verwendung in einem Tank (8), wobei der Tank einen Boden (9) und mindestens eine Wand (10) aufweist, wobei die Sonde zum kontinuierlichen Messen eines Fluids (2) konfiguriert ist, während sie in das Fluid eingetaucht ist, wobei die Sonde Folgendes umfasst:
a. ein Prozessorgehäuse (20);
b. mehrere Sensorgehäuse (21a - 21i), die mit dem Prozessorgehäuse (20) verbunden sind;
c. mehrere Druckwandler (22a - 22i), wobei sich jeder Druckwandler in einem Sensorgehäuse befindet, jeder Druckwandler eine Membran (24a - 24i) aufweist und jeder Druckwandler für eine kontinuierliche Druckmessung durch direkten Kontakt mit dem Fluid (2) in dem Tank (8) konfiguriert ist;
d. mehrere Temperatursensoren (30a - 30i), wobei jeder Temperatursensor innerhalb eines Sensorgehäuses oder in jedem Druckwandler enthalten ist, wobei jeder Temperatursensor zum kontinuierlichen Messen der Temperatur des Fluids (2) in dem Tank (8) konfiguriert ist;
e. einen Neigungsmesser, der optional entweder an einem schwimmenden Schiff oder innerhalb des Prozessorgehäuses (20) zum Messen von Winkeln des schwimmenden Schiffs relativ zur Schwerkraft montiert ist;
f. einen Sondenprozessor (40) in dem Prozessorgehäuse (20), wobei der Sondenprozessor elektrisch und bidirektional mit den mehreren Druckwandlern (22a - 22i), den mehreren Temperatursensoren (30a - 30i), dem Neigungsmesser und einem Netzwerk (64) verbunden ist; und
g. einen Sonden-Datenspeicher (50) in dem Prozessorgehäuse (20), wobei der Sonden-Datenspeicher mit dem Sondenprozessor (40) in Kommunikation ist, wobei der Sonden-Datenspeicher ein nichtflüchtiges, computerlesbares Medium mit Computerbefehlen ist, um den Sondenprozessor anzuweisen, die mehreren Temperatursensoren (30a - 30i) und die mehreren Druckwandler (22a - 22i) zu steuern, um bidirektionale Signale an das Netzwerk, die mehreren Temperatursensoren und die mehreren Druckwandler zu erzeugen, wobei der Sonden-Datenspeicher Folgendes enthält:
(i) eine Tankkapazitätstabelle (200);
(ii) Computerbefehle (202), konfiguriert zum Anweisen des Sondenprozessors, mindestens eine physikalische Eigenschaft in Bezug auf Wassergehalt für das Fluid zu berechnen, wobei die physikalische Eigenschaft ausgewählt ist aus einem der Folgenden:
1. einem Gehalt an mitgeführtem Wasser in dem Fluid (316); und
2. einem Gehalt an freiem Wasser in dem Fluid (318);
(iii) Computerbefehle (204), konfiguriert zum Anweisen des Sondenprozessors, eine adaptive Messung für mindestens eines der Folgenden durchzuführen:
1. eine synchronisierte Messung des Fluids im statischen Betrieb, die über die mehreren Temperatursensoren (30a - 30i) und Druckwandler (22a - 22i) erfolgt;
2. eine nicht synchronisierte Messung des Fluids im statischen Betrieb;
3. eine nicht synchronisierte Messung des Fluids im dynamischen Betrieb; oder
4. eine synchronisierte Messung des Fluids im dynamischen Betrieb, die über die mehreren Temperatursensoren (30a - 30i) und Druckmesswandler (22a - 22i) erfolgt;
(iv) Computerbefehle (208), konfiguriert zum Anweisen des Sondenprozessors zu bestimmen, welche der mehreren Temperatursensoren und der mehreren Druckwandler nicht von dem Fluid bedeckt sind, durch Vergleichen von Signalen von den mehreren Temperatursensoren und den mehreren Druckwandlern miteinander;
(v) Computerbefehle (210), konfiguriert zum Anweisen des Sondenprozessors, die Bewegung des Fluids im Tank zu messen;
(vi) Computerbefehle (212), konfiguriert zum Anweisen des Sondenprozessors, Druckwandler des Tanks zu kalibrieren, wenn die Druckwandler nicht mehr im Fluid sind;
(vii) Computerbefehle (213), konfiguriert zum Anweisen des Sondenprozessors, Neigungsmesserwerte zum Neuberechnen der Position jedes der Temperatursensoren und jedes der Druckmesswandler im Fluid zu verwenden und die Tankkapazitätstabelle zum Bestimmen des genauen Volumens und der Masse der Flüssigkeit und des Dampfes des Fluids zu verwenden; und
(viii) Computerbefehle (214), konfiguriert zum Anweisen des Sondenprozessors, mit einem Client-Gerät über das Netzwerk mittels der bidirektionalen Signale zu kommunizieren.

2. Sonde nach Anspruch 1 mit mindestens einem Temperatur- und Druckwandler (61), der sich in einem Dampfraum (15) des Tanks (8) befindet, und/oder einem externen Sensor (63) außerhalb des Tanks, der elektrisch mit dem Sondenprozessor verbunden ist, wobei der externe Sensor zum Messen von Umgebungsdruck und Umgebungstemperatur außerhalb des Tanks konfiguriert ist, wobei der externe Sensor Signale an den Sondenprozessor liefert, wobei der Sondenprozessor Computerbefehle in dem Sonden-Datenspeicher verwendet, wobei die Computerbefehle konfiguriert sind zum Anweisen des Sondenprozessors, gemessene(n) Umgebungsdruck und Temperatur mit dem/der gemessenen Druck und Temperatur innerhalb des Tanks zu vergleichen, um die Gasdecke zu überwachen und den Tank zu schützen.

3. Sonde nach einem der vorherigen Ansprüche, wobei eine Außenfläche (81) der Sonde in einer gestuften Konfiguration expandiert, wobei sie um mindestens zehn Prozent im Durchmesser zunimmt.

4. Sonde nach einem der vorherigen Ansprüche mit einem Kanal (79) im Sensorgehäuse, um mindestens einen der mehreren Temperatursensoren und mindestens einen der mehreren Druckmesswandler mit dem Fluid aus dem Tank in Kontakt zu bringen.

5. Sonde nach Anspruch 4 mit mehreren geneigten Flächen auf mindestens einer Seite des Kanals (79), wobei die mehreren geneigten Flächen Kontakt des Fluids mit einem Druckwandler und/oder einem Temperatursensor ermöglichen.

6. Sonde nach einem der vorherigen Ansprüche mit mehreren Schaltern (66a - 66d) im Tank (8), die ein Benachrichtigungssignal an den Sondenprozessor (40), das Netzwerk (64) oder sowohl an den Sondenprozessor als auch an das Netzwerk liefern, wenn die Flüssigkeit einen voreingestellten Pegel überschreitet oder nicht erreicht.

7. Sonde nach einem der vorherigen Ansprüche mit einem Tankbewegungsmessgerät (83), das mit dem Sondenprozessor (40) und/oder einem Fernprozessor (71) zum Anzeigen und Messen von Sondenbewegung aufgrund des Durchbiegens des Bodens des Tanks oder aufgrund des Durchbiegens eines Dachs des Tanks verbunden ist.

8. Sonde nach Anspruch 7 mit dem Fernprozessor (71), der über das Netzwerk (64) bidirektional mit dem Sondenprozessor (40) verbunden ist, wobei der Fernprozessor ferner einen Ferndatenspeicher (73) umfasst, wobei der Ferndatenspeicher mindestens eines umfasst aus:
a. Computerbefehlen (430), konfiguriert zum Anweisen des Fernprozessors, für Emissionsüberwachung erforderliche Parameter zu berechnen;
b. Computerbefehlen (432), konfiguriert zum Anweisen des Fernprozessors, Parameter zu berechnen, die für Leckerkennung und unerlaubte Bewegung von Fluid in den oder aus dem Tank notwendig sind;
c. Computerbefehlen (434), konfiguriert zum Anweisen des Fernprozessors, für den Überfüllungsschutz des Tanks erforderliche Parameter zu berechnen; und
d. Computerbefehlen (436), konfiguriert zum Anweisen des Fernprozessors, Tanküberdruck- oder -vakuumparameter im Tank zu berechnen.

9. Sonde nach Anspruch 7 oder 8 mit Computerbefehlen (322) zum Anweisen des Fernprozessors, eine berechnete Masse des Fluids zum Ausgleichen beim Be- und Entladens des schwimmenden Schiffs und für Bestandskontrolle und eichpflichtigen Verkehr zu verwenden.

10. Sonde nach einem der vorherigen Ansprüche, wobei der Sonden-Datenspeicher mindestens eines umfasst aus:
a. Computerbefehlen (218), konfiguriert zum Anweisen des Sondenprozessors, eine Selbstkalibrierung durchzuführen;
b. Computerbefehlen (220), konfiguriert zum Anweisen des Sondenprozessors, eine Selbstdiagnose durchzuführen;
c. Computerbefehlen (222), konfiguriert zum Anweisen des Sondenprozessors, eine Selbstkonfiguration durchzuführen;
d. Computerbefehlen (224), konfiguriert zum Anweisen des Sondenprozessors, online zu konfigurieren und umzukonfigurieren; und
e. Computerbefehle (232) in dem Sonden-Datenspeicher, konfiguriert zum Anweisen des Sondenprozessors, die mehreren Temperatursensoren und/oder die mehreren Druckwandler zum Berechnen von Parameter zu verwenden, die für Leckerkennung und unerlaubte Bewegung von Fluid in den und aus dem Tank erforderlich sind.

11. Sonde nach einem der vorherigen Ansprüche, die eine Temperatursensorschaltung (85) im Sondenprozessor mit einem Temperaturreferenzwert (234) im Sonden-Datenspeicher und eine Druckwandlerschaltung (87) im Sondenprozessor mit einem Druckreferenzwert (235) im Sonden-Datenspeicher umfasst, wobei die Temperatursensorschaltung und die Druckwandlerschaltung zum Kalibrieren des Sondenprozessors dienen.

12. Sonde nach einem der Ansprüche 2 bis 11 mit Computerbefehlen im Sonden-Datenspeicher (50), wobei die Computerbefehle (230) konfiguriert sind zum Anweisen des Sondenprozessors, die mehreren Druckwandler und die mehreren Temperatursensoren innerhalb des Tanks, eventuelle im Dampfraum des Tanks befindliche Temperatursensoren und Druckwandler und den externen Sensor zum Berechnen von für Emissionsüberwachung erforderlichen Parametern zu verwenden.

13. Sonde nach einem der vorherigen Ansprüche, die ferner mindestens einen Detektor (69) für schwefelhaltige Verbindungen in Kommunikation mit dem Sondenprozessor (40) zum Detektieren schwefelhaltiger Verbindungen und Computerbefehle im Sonden-Datenspeicher umfasst, konfiguriert zum Anweisen des Sondenprozessors, die Konzentration der schwefelhaltigen Verbindungen zum Schutz des Personals oder zum Schätzen der Qualität von Rohöl zu berechnen, wobei sich der Detektor für schwefelhaltige Verbindungen in einer Flüssigkeit im Tank, im Dampfraum des Tanks oder außerhalb des Tanks montiert befindet.

14. Sonde nach einem der vorherigen Ansprüche, wobei das Prozessorgehäuse (20) wetterfest oder explosionssicher ist und/oder das Prozessorgehäuse zum Verhüten von Verschlechterung in Meeresumgebungen konfiguriert ist.

15. Sonde nach einem der vorherigen Ansprüche mit mehreren Leitungen (19a - 19i), die das Prozessorgehäuse (20) mit den Sensorgehäusen (21a - 21i) verbinden und sich bis zu einem Boden der Sonde erstrecken.

## Revendications

1. Sonde (1) sans pièces mobiles destinée à être utilisée dans un réservoir (8), le réservoir ayant un fond (9) et au moins une paroi (10), la sonde étant configurée pour une mesure continue d'un fluide (2) pendant qu'elle est immergée dans le fluide, où la sonde comprend :
a. un boîtier de processeur (20) ;
b. une pluralité de boîtiers de capteurs (21a - 21i) reliés au boîtier de processeur (20) ;
c. une pluralité de transducteurs de pression (22a - 22i), chaque transducteur de pression se trouvant au sein d'un boîtier de capteur, chaque transducteur de pression ayant une membrane (24a - 24i), chaque transducteur de pression étant configuré pour une mesure continue de pression par contact direct avec le fluide (2) dans le réservoir (8) ;
d. une pluralité de capteurs de température (30a - 30i), chaque capteur de température se trouvant au sein d'un boîtier de capteur ou étant contenu dans chaque transducteur de pression, chaque capteur de température étant configuré pour une mesure continue de température du fluide (2) dans le réservoir (8) ;
e. un inclinomètre, monté facultativement soit sur une cuve flottante, soit au sein du boîtier de processeur (20) pour mesurer des angles de la cuve flottante par rapport à la gravité ;
f. un processeur de sonde (40) dans le boîtier de processeur (20), le processeur de sonde étant relié de manière électrique et bidirectionnelle à la pluralité de transducteurs de pression (22a - 22i), à la pluralité de capteurs de température (30a- 30i), à l'inclinomètre et à un réseau (64) ; et
g. un stockage de données de sonde (50) dans le boîtier de processeur (20), le stockage de données de sonde étant en communication avec le processeur de sonde (40), le stockage de données de sonde étant un support lisible par ordinateur non transitoire avec des instructions informatiques pour ordonner au processeur de sonde de commander la pluralité de capteurs de température (30a - 30i) et la pluralité de transducteurs de pression (22a - 22i) afin de produire des signaux bidirectionnels vers le réseau, vers la pluralité de capteurs de température et vers la pluralité de transducteurs de pression, le stockage de données de sonde contenant :
(i) un tableau de capacité de réservoir (200) ;
(ii) des instructions informatiques (202) configurées pour ordonner au processeur de sonde de calculer au moins une propriété physique liée à une teneur en eau pour le fluide, la propriété physique étant une propriété physique choisie parmi :
1. une teneur en eau entraînée dans le fluide (316) ; et
2. une teneur en eau libre dans le fluide (318) ;
(iii) des instructions informatiques (204) configurées pour ordonner au processeur de sonde d'effectuer une mesure adaptative pour au moins une mesure parmi :
1. une mesure synchronisée du fluide en fonctionnement statique qui se produit par l'intermédiaire de la pluralité de capteurs de température (30a - 30i) et de transducteurs de pression (22a- 22i) ;
2. une mesure non synchronisée du fluide en fonctionnement statique ;
3. une mesure non synchronisée du fluide en fonctionnement dynamique ; ou
4. une mesure synchronisée du fluide en fonctionnement dynamique qui se produit par l'intermédiaire de la pluralité de capteurs de température (30a - 30i) et de transducteurs de pression (22a - 22i) ;
(iv) des instructions informatiques (208) configurées pour ordonner au processeur de sonde de déterminer quels capteurs et transducteurs parmi la pluralité de capteurs de température et la pluralité de transducteurs de pression ne sont pas recouverts par le fluide en comparant des signaux de la pluralité de capteurs de température et de la pluralité de transducteurs de pression les uns aux autres ;
(v) des instructions informatiques (210) configurées pour ordonner au processeur de sonde de mesurer un mouvement du fluide dans le réservoir ;
(vi) des instructions informatiques (212) configurées pour ordonner au processeur de sonde d'étalonner des transducteurs de pression du réservoir lorsque les transducteurs de pression ne se trouvent plus dans le fluide ;
(vii) des instructions informatiques (213) configurées ordonner au processeur de sonde d'utiliser des valeurs d'inclinomètre afin de recalculer l'emplacement de chacun des capteurs de température et de chacun des transducteurs de pression dans le fluide, et d'utiliser le tableau de capacité de réservoir afin de déterminer un volume précis et une masse précise de liquide et de vapeur du fluide ; et
(viii) des instructions informatiques (214) configurées pour ordonner au processeur de sonde de communiquer avec un dispositif client par l'intermédiaire du réseau à l'aide des signaux bidirectionnels.

2. Sonde selon la revendication 1, comprenant au moins un transducteur de température et de pression (61) situé dans un espace de vapeur (15) du réservoir (8), et/ou un capteur externe (63) à l'extérieur du réservoir et relié électriquement au processeur de sonde, le capteur externe étant configuré pour mesurer une pression ambiante et une température ambiante à l'extérieur du réservoir, le capteur externe fournissant des signaux au processeur de sonde, le processeur de sonde utilisant des instructions informatiques dans le stockage de données de sonde, les instructions informatiques étant configurées pour ordonner au processeur de sonde de comparer une pression et une température ambiantes mesurées à une pression et à une température mesurées à l'intérieur du réservoir pour la surveillance de couche de gaz et la protection des biens du réservoir.

3. Sonde selon l'une quelconque des revendications précédentes, où une surface externe (81) de la sonde s'élargit selon une configuration étagée, augmentant d'au moins dix pour cent en diamètre.

4. Sonde selon l'une quelconque des revendications précédentes, comprenant un canal (79) dans le boîtier de capteur afin de fournir un contact avec le fluide provenant du réservoir vers au moins un capteur de la pluralité de capteurs de température et au moins un transducteur de la pluralité de transducteurs de pression.

5. Sonde selon la revendication 4, comprenant une pluralité de surfaces inclinées sur au moins un côté du canal (79), la pluralité de surfaces inclinées permettant à du fluide d'entrer en contact avec au moins un élément parmi : un transducteur de pression et un capteur de température.

6. Sonde selon l'une quelconque des revendications précédentes, comprenant une pluralité de commutateurs (66a - 66d) dans le réservoir (8) qui fournissent un signal de notification au processeur de sonde (40), au réseau (64), ou à la fois au processeur de sonde et au réseau lorsque le liquide dépasse ou ne respecte pas un niveau prédéfini.

7. Sonde selon l'une quelconque des revendications précédentes, comprenant un dispositif de mesure de mouvement de réservoir (83) relié à au moins un élément parmi :
le processeur de sonde (40) et un processeur à distance (71) pour afficher et mesurer un mouvement de sonde dû à la flexion du plancher du réservoir ou à la flexion d'un toit du réservoir.

8. Sonde selon la revendication 7, comprenant le processeur à distance (71) relié de manière bidirectionnelle au processeur de sonde (40) par l'intermédiaire du réseau (64), le processeur à distance comprenant en outre un stockage de données à distance (73), le stockage de données à distance comprenant au moins un élément parmi :
a. des instructions informatiques (430) configurées pour ordonner au processeur à distance de calculer des paramètres nécessaires à la surveillance des émissions ;
b. des instructions informatiques (432) configurées pour ordonner au processeur à distance de calculer des paramètres nécessaires à la détection de fuite et de mouvement non autorisé de fluide dans le réservoir ou hors du réservoir ;
c. des instructions informatiques (434) configurées pour ordonner au processeur à distance de calculer des paramètres nécessaires à la protection antidébordement du réservoir ; et
d. des instructions informatiques (436) configurées pour ordonner au processeur à distance de calculer des paramètres de surpression ou de dépression de réservoir dans le réservoir.

9. Sonde selon la revendication 7 ou la revendication 8, comprenant des instructions informatiques (322) pour ordonner au processeur à distance d'utiliser une masse calculée du fluide pour équilibrer pendant le chargement et le déchargement de la cuve flottante et pour le contrôle des stocks et le comptage transactionnel.

10. Sonde selon l'une quelconque des revendications précédentes, où le stockage de données de sonde comprend au moins un élément parmi :
a. des instructions informatiques (218) configurées pour ordonner au processeur de sonde d'effectuer un autoétalonnage ;
b. des instructions informatiques (220) configurées pour ordonner au processeur de sonde d'effectuer des autodiagnostics ;
c. des instructions informatiques (222) configurées pour ordonner au processeur de sonde d'effectuer une autoconfiguration ;
d. des instructions informatiques (224) configurées pour ordonner au processeur de sonde de se configurer et de se reconfigurer en ligne ; et
e. des instructions informatiques (232) dans le stockage de données de sonde configurées pour ordonner au processeur de sonde d'utiliser la pluralité de capteurs de température et/ou la pluralité de transducteurs de pression afin de calculer des paramètres nécessaires à la détection de fuite et de mouvement non autorisé de fluide dans le réservoir et hors du réservoir.

11. Sonde selon l'une quelconque des revendications précédentes, comprenant un circuit capteur de température (85) dans le processeur de sonde avec une valeur de référence de température (234) dans le stockage de données de sonde et un circuit transducteur de pression (87) dans le processeur de sonde avec une valeur de référence de pression (235) dans le stockage de données de sonde, le circuit capteur de température et le circuit transducteur de pression étant destinés à étalonner le processeur de sonde.

12. Sonde selon l'une quelconque des revendications 2 à 11, comprenant des instructions informatiques dans le stockage de données de sonde (50), les instructions informatiques (230) étant configurées pour ordonner au processeur de sonde d'utiliser la pluralité de transducteurs de pression et la pluralité de capteurs de température internes au réservoir, tout capteur de température et tout transducteur de pression situés dans l'espace de vapeur du réservoir et le capteur externe afin de calculer des paramètres nécessaires à la surveillance des émissions.

13. Sonde selon l'une quelconque des revendications précédentes, comprenant en outre au moins un détecteur de composé contenant du soufre (69) en communication avec le processeur de sonde (40) pour détecter des composés contenant du soufre et des instructions informatiques dans le stockage de données de sonde configurées pour ordonner au processeur de sonde de calculer une concentration en composés contenant du soufre pour la protection du personnel ou pour l'estimation de la qualité de pétrole brut, où le détecteur de composé contenant du soufre se trouve dans du liquide dans le réservoir, dans de la vapeur dans le réservoir ou monté à l'extérieur du réservoir.

14. Sonde selon l'une quelconque des revendications précédentes, où le boîtier de processeur (20) est étanche ou antidéflagrant, et/ou le boîtier de processeur est configuré pour empêcher une dégradation dans des environnements marins.

15. Sonde selon l'une quelconque des revendications précédentes, comprenant une pluralité de conduits (19a - 19i) reliant le boîtier de processeur (20) aux boîtiers de capteur (21a - 21i) et s'étendant jusqu'à une partie inférieure de la sonde.
